# EUROPÄISCHE PATENTSCHRIFT

(11) **EP 1 062 846 B1**
(45) Veröffentlichungstag und Bekanntmachung des Hinweises auf die Patenterteilung: **09.01.2002**
(21) Anmeldenummer: 99911757.5
(22) Anmeldetag: 09.03.1999
(51) Int. Cl.: H05B 37/02

(54) **BEWEGUNGSSENSORGESTEUERTE LEUCHTENVORRICHTUNG**
LIGHTING DEVICE CONTROLLED BY MOTION SENSOR
DISPOSITIF D'ECLAIRAGE COMMANDE PAR UN DETECTEUR DE MOUVEMENT

(30) Priorität: 09.03.1998 DE 29804089 U; 05.03.1999 DE 29903904 U
(43) Veröffentlichungstag der Anmeldung: 27.12.2000
(73) Patentinhaber: Steinel GmbH & Co. KG, 33442 Herzebrock-Clarholz (DE)
(72) Erfinder: STEINEL, Heinrich, Wolfgang, D-86825 Bad Wörishofen (DE); FRANKE, Thomas, D-33758 Schloss Holte-Stukenbrock (DE)
(74) Vertreter: Behrmann, Niels, Dipl.-Ing.
(86) Internationale Anmeldenummer: EP9901499
(87) Internationale Veröffentlichungsnummer: WO9946962

(56) Entgegenhaltungen:
- EP-A- 0 785 701
- DE-A- 4 311 804
- DE-A- 19 623 481
- US-A- 5 585 697

## Beschreibung

Die Erfindung betrifft eine bewegungssensorgesteuerte Leuchtenvorrichtung nach dem Oberbegriff des Patentanspruches 1. Derartige Vorrichtungen sind beispielsweise aus der DE 196 01 489 A1 der Anmelderin bekannt und basieren auf dem Prinzip, gängige Leuchtmittel -- Glühlampen, Energiesparlampen o.ä. -- in möglichst kompakter Weise mit einem Bewegungsdetektor zu verbinden, um das Leuchtmittel dann bewegungssteuert aktivieren und deaktivieren zu können.

Bei dem bekannten Stand der Technik wurde der Bewegungssensor in einem bevorzugt in eine Leuchtmittelfassung einsetzbaren Sockelgehäuse aufgenommen, wobei dieses Sockelgehäuse dann seinerseits eine Leuchtmittelfassung zum Einsetzen des Leuchtmittels anbot.

Eine solche Technologie eignet sich damit insbesondere für solche Leuchten, bei denen das Leuchtmittelgehäuse hinreichend Platz zum Ein- bzw. Zwischensetzen des Sockelgehäuses bietet.

Insbesondere unter kompakten Leuchtenschirmen bzw. bei nur begrenztem Raum oberhalb des Leuchtmittelsockels kann es jedoch Umstände geben, die das Einfügen dieses bekannten Sockelgehäuses zwischen Sockel und Leuchtmittel nicht gestatten. Dies gilt insbesondere dann, wenn etwa aufgrund der notwendigen Elektronik oder Antenne das einzusetzende Sockelgehäuse eine bestimmte Mindestgröße überschreitet.

Aufgabe der vorliegenden Erfindung ist es daher, eine gattungsgemäße bewegungssensorgesteuerte Leuchtenvorrichtung dahingehend zu verbessern, daß die Gesamtanordnung kompakter wird und insbesondere auch unter beengten Raumverhältnissen einsetzbar wird.

Die Aufgabe wird durch die bewegungssensorgesteuerte Leuchtenvorrichtung mit den Merkmalen des Patentanspruches 1 gelöst. Vorteilhafte Weiterbildungen der Erfindung sind in den Unteransprüchen beschrieben.

In erfindungsgemäß vorteilhafter Weise nutzt dabei das Trägermodul den vom Leuchtmittel bestimmten Innen- bzw. Zwischenraum und sieht dort insbesondere die Sensorelektronik mit Sende- und/oder Empfangsantenne vor; nicht nur wird dadurch erfindungsgemäß vermieden, dass diese zusätzlichen Module in den Bewegungssockel selbst integriert werden müssen; auch findet durch diese Maßnahme eine Trennung der Sensorelektronik von den im Befestigungssockel bereits vorhandenen Schaltungen (insbesondere einem üblichen elektronischen Vorschaltgerät (EVG) für das Leuchtmittel) statt, so dass insbesondere auch aus strahlungstechnischer und thermischer Sicht der Bewegungssensor einfach und platzsparend aufgenommen werden kann, ohne dass etwa die -- temperaturempfindliche -- Sensorelektronik von der Leuchtmittel-Vorschaltelektronik nachteilig erwärmt werden würde.

Im Zusammenhang mit der vorliegenden Erfindung ist dabei als Innen- und/oder Zwischenraum jeglicher, oberhalb des Befestigungssockels gelegener Raum zu verstehen, welcher durch Abschnitte des Leuchtmittels bestimmt, definiert bzw. begrenzt wird, wobei derartige Innen- bzw. Zwischenräume ansonsten ungenutzt blieben. Insbesondere im Fall von röhrenförmigen Leuchtmitteln -- langgestreckten, gebogenen oder gewendelten Leuchtmittelröhren -- sind als erfindungsgemäße Innen- bzw. Zwischenräume sämtliche Raumbereiche zu verstehen, die innerhalb einer berührend um das Leuchtmittel gelegten, gedachten Schale liegen.

In weiterbildungsgemäß vorteilhafter Weise macht sich die Erfindung die Durchdringungseigenschaften von Mikrowellen zugute, indem sie nämlich die Sende- bzw. Empfangsantenne in platzsparender Weise so hinter bzw. zwischen das Leuchtmittel plaziert, daß die ausgesendeten bzw. empfangenen Mikrowellen das Leuchtmittel im Überdeckungsbereich durchdringen können.

Dabei ist die Erfindung nicht auf eine spezielle Form oder Ausführung eines Leuchtmittels beschränkt.

So ist es nämlich besonders bevorzugt, das Leuchtmittel als Gasentladungs-Leuchtmittel zu realisieren, wobei eine zugehörige Entladungsröhre in erfindungsgemäßer Weise vor bzw. um die Sende- bzw. Empfangsantenne herum angeordnet ist, und wobei weiter bevorzugt diese Sende- bzw. Empfängsantenne auf einem flachen Substrat ausgebildet ist.

Eine mögliche geeignete Ausführungsform der Gasentladungslampe ist die -- einfache oder doppelte -- Wendelform, bei welcher die Röhre zum Erreichen eines möglichst kompakten Objektes bei maximaler Röhrenlänge spiralartig aufgewickelt ist und sich um die Sende- bzw. Empfangsantenne herum erstreckt. Damit ist das Leuchtmittel als spiralförmig aufgewickeltes bzw. wendelförmiges Gasentladungsrohr realisiert, das zumindest einen Teilbereich der Sende- und/oder Empfangsantenne bzw. des Trägermoduls umgreift. Besonders günstig ist es ferner, wenn das Leuchtmittel als Doppelwendel mit hin- und rücklaufender Wendelstruktur realisiert ist. In erfindungsgemäß vorteilhafter Weise kann so der zur Verfügung stehende Raum oberhalb des Befestigungssockels optimal ausgenutzt werden, ohne daß etwa dieser Befestigungssockel zum Aufnehmen der Antenne unnötig und nachteilig vergrößert ist.

Erfindungsgemäß enthält nämlich der Befestigungssockel lediglich die herkömmlicherweise auch schon in einem solchen Sockel vorhandene Vorschaltelektronik für das Leuchtmittel (EVG), und lediglich im Rahmen einer möglichen Weiterbildung könnte dieser Sockel zusätzlich die (kompakte) Steuer- bzw. Auswertelektronik für den Bewegungssensor enthalten.

Alternativ ist es möglich, diese Sensor-Elektronikbauelemente ebenfalls auf dem flächigen Träger für die Sende/Empfangsantenne vorzusehen, was dann die vollständige Realisierung des Bewegungssensors als Modul und damit die einfache Nachrüstung bestehender Sensorleuchten (etwa durch Einstecken des Sensorträgers in den Sockel zwischen dem Leuchtmittel) ermöglicht.

Eine besonders geeignete Realisierungsform für den Mikrowellen-Bewegungssensor ist der Breitband-Impulsradarsensor, der auf einer Frequenz im Bereich zwischen etwa 2 und etwa 20 GHz arbeitet und besonders geeignet ist, sowohl das Leuchtmittel als auch einen etwaigen, umgebenden Lampenschirm zu durchdringen.

In erfindungsgemäß vorteilhafter Weiterbildung ist es zudem vorgesehen, die Leuchtenvorrichtung mit einer Helligkeits- und/oder Zeitsteuereinheit zu versehen, die etwa im Fall einer Helligkeitssteuerung, die weiter bevorzugt eigenlichtkompensiert ist, eine Aktivierung oder Deaktivierung des Leuchtmittels in Abhängigkeit von einem Umgebungslichtpegel vornimmt. Damit kann beispielsweise ein Leuchtenbetrieb in heller Tageslichtumgebung (trotz Bewegungserfassung) verändert werden. Ergänzend oder alternativ sorgt die weiterbildungsgemäße Zeitsteuereinheit dafür, dass, etwa zu vorbestimmten Abendstunden, die Leuchtenvorrichtung im Dauerbetrieb betrieben wird, während ansonsten lediglich bedarfsweise, nämlich in Folge erfasster Bewegung eines Objektes, ein Leuchtenbetrieb mit vorbestimmter Leuchtdauer ausgelöst wird.

Weitere Vorteile, Merkmale und Einzelheiten der Erfindung ergeben sich aus der nachfolgenden Beschreibung von Ausführungsbeispielen sowie anhand der Zeichnungen; diese zeigen in
- Fig. 1:: eine schematische Seitenansicht der erfindungsgemäßen, bewegungssensorgesteuerten Leuchtenvorrichtung gemäß einer ersten Ausführungsform;
- Fig. 2:: eine Seitenansicht der erfindungsgemäßen, bewegungssensorgesteuerten Leuchtenvorrichtung gemäß einer zweiten, bevorzugten Ausführungsform;
- Fig. 3:: eine Querschnittsansicht entlang der Schnittlinie III - III in Fig. 2;
- Fig. 4:: eine Querschnittsansicht analog Fig. 3 entlang der Schnittlinie IV - IV in Fig. 2;
- Fig. 5:: eine schematische Ansicht eines langgestreckten, mit Elektronikbauelementen bestückten Trägerelements für die Bewegungssensoreinheit mit endseitigem Antennenabschnitt und
- Fig. 6:: eine Detailansicht des Ausschnittes VI mit dem endseitigen Antennenabschnitt der Trägerplatine gemäß Fig. 5.

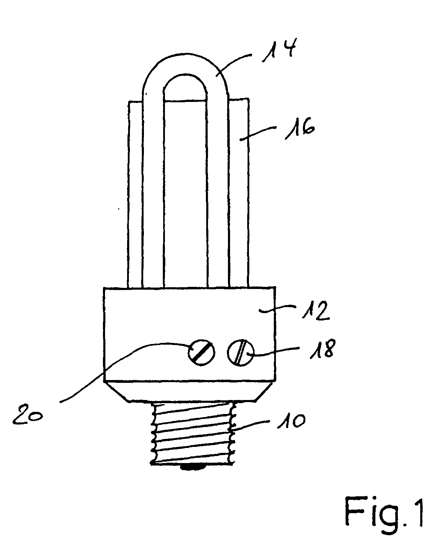

Die in der Fig. 1 schematisch gezeigte Leuchte ist in der äußeren Form Vorrichtungen nachgebildet, wie sie handelsüblich sind und etwa als sog. Energiesparleuchten vertrieben werden. Ein mit einem Schraubsockel 10 für eine gängige Glühlampenfassung versehenes Gehäuse 12 bietet den Raum für die Steuer- bzw. Vorschaltelektronik (nicht im Detail gezeigt) einer Gasentladungslampe 14, die auf übliche Weise mit transformierter Netzspannung betrieben werden kann.

Im Rahmen der vorliegenden Erfindung ist eine solche Leuchte mit einem Bewegungssensor dergestalt verbunden, daß -- wie schematisch durch die flächige Trägerplatine 16 angedeutet -- hinter bzw. zwischen dem eigentlichen Leuchtmittel 14 die Sende- und/oder Empfangsantenne eines Radar-Bewegungssensors angeordnet ist, und dieser Radar-Bewegungssensor im Betrieb über das flächige Trägerelement 16 als Antenne elektromagnetische Wellen ausstrahlt bzw. empfängt. Diese liegen üblicherweise im Bereich zwischen etwa 2 und etwa 20 GHz und sind damit in der Lage, problemlos nicht nur die Leuchtmittelröhre 14 (bzw. darin enthaltenes Leuchtgas) zu durchdringen, sondern auch eine eventuelle Abdeckung oder einen Lampenschirm, der die gezeigte Anordnung im montierten Zustand umgeben kann.

Genauer gesagt wird zur Realisierung des Bewegungssensors 16 ein Mikrowellensensor benutzt, der auf Impulsbasis arbeitet und ein breitbandiges Impuls-Sendespektrum, bei einer Trägerfrequenz von 2 GHz etwa 500 MHz breit, ausstrahlt. Mittels eines vorgegebenen, einem Erkennungsabstand entsprechenden Zeittores (gebildet aus Hinlauf- und Rücklaufzeit eines Signalimpulses von einem im Erkennungsabstand stehenden Objekt) wird mittels einer auf der Trägerplatine 16 gebildeten Antennenanordnung eine Vielzahl von reflektierten Impulsen erfaßt, und aus deren Empfangshäufigkeit (Integration) bzw. der Veränderung der Empfangshäufigkeit wird auf eine Bewegung des zu erfassenden Objektes rückgeschlossen.

Auch würde eine solche Impuls-Radartechnik eine Anwesenheitserfassung dergestalt ermöglichen, daß im Gegensatz zur beschriebenen Bewegungserfassung keine reflektierten Signale von einem konstanten, laufzeitabhängigen Erfassungsabstand (entsprechend gewissermaßen einer Schale im Raum) empfangen und ausgewertet werden, sondern dieser schalenförmige Erfassungsbereich kontinuierlich und zyklisch elektronisch durchfahren wird, so daß eine Anwesenheitserkennung (auch ohne sich etwa das Erfassungsobjekt bewegen muß) möglich ist.

Ein im Rahmen der vorliegenden Erfindung zweckmäßig eingesetzter, auf Impulsbasis arbeitender Radarsensor ist in gängigen Frequenzbereichen -- 2 GHz, 5,7 GHz oder höher -- betreibbar, sorgt durch die emittierten bzw. reflektierten Radarimpulse für eine befriedigende Durchdringung insbesondere auch des Leuchtmittels 14 und ist auf die gezeigte Weise in besonders platzsparender Weise montierbar.

So ist es insbesondere auch vorgesehen, daß das Leuchtmittel -- nicht wie in Fig. 1 gezeigt -- bogenförmig, sondern spiral- bzw. einfach oder doppelt wendelförmig ausgebildet ist und sich so in Form einer Spirale (vergleichbar der Form eines Tauchsieders) um die senkrecht stehende Antennenplatine 16 herum erstreckt. Insbesondere diese Anordnung ermöglicht eine Optimierung des benötigten Raumes, da der von der gewendelten Leuchtröhre umschlossene Innenraum hier in vorteilhafter Weise zur Aufnahme der Sensorantenne, ggf. sogar zusätzlich der Sensorelektronik, verwendet wird, ohne daß zusätzlicher Raum im (vom EVG belegten) Sockelgehäuse benötigt wird. Bevorzugt ist zudem ein so aufgebautes Sensormodul auf das Gehäuse 12 aufsteckbar, wird von der darin enthaltenen Elektronik mit Betriebsspannung versorgt und macht so gängige Energiesparleuchten mit geringstem Aufwand nachrüstbar.

Der Erfassungsbereich der Bewegungssensoranordnung richtet sich nach dem vorgesehenen Einsatzzweck und wird durch entsprechende Ausgestaltung der Antennenstruktur auf den Träger 16 realisiert; insbesondere ist auch ein kreisförmiger Erfassungsbereich (radialsymmetrisch zur Längsachse durch die Anordnung der Fig. 1) möglich.

Alternativ zur gezeigten Ausbildung als Impuls-Radarsensor ist die Realisierung des Bewegungssensors auch als nach dem Dopplerprinzip arbeitender Radarsensor denkbar. Hier wird eine Bewegung eines Erfassungsobjektes im Erfassungsbereich des Sensors als Frequenzverschiebung zwischen dem ausgestrahlten Signal und dem reflektierten Empfangssignal erfaßt, und diese Frequenzverschiebung (Dopplerfrequenz) wird zur Bewegungs- und Geschwindigkeitserfassung ausgewertet.

Weiter alternativ zur gezeigten Ausbildung ist ein Impuls-Radarsensor denkbar, der nach dem Homodyn-Prinzip arbeitet, und bei welchem breitbandige Sendeimpulse durch ihre Impulsform und -dauer einen wirksamen Erfassungsbereich definieren; gleichzeitig und verzögerungsfrei wird ein solches Sendesignal dann empfangsseitig in den Bewegungssensor eingekoppelt, um ein nicht-lineares Mischerelement aufzusteuern. Das resultierende Mischersignal wird dann zur Bewegungserfassung ausgewertet.

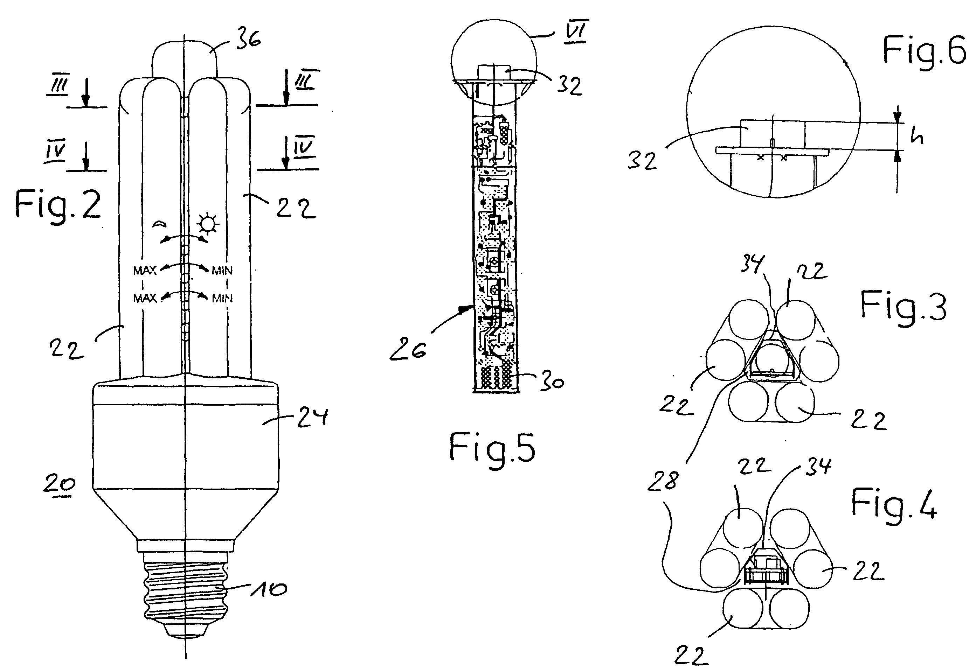

Ein derartiger Sensortyp findet bei der anhand der Fig. 2 bis 6 gezeigten Ausführungsform Verwendung: Eine der Bauart einer handelsüblichen Energiesparleuchte entsprechende Leuchtenvorrichtung 20 weist ein Gasentladungsleuchtmittel auf, welches seinerseits aus drei langgestreckten, am oberen Ende gebogenen Röhrenpaaren 22 besteht, die, vgl. die Schnittansicht in der Fig. 3 und 4, auf einer Oberseite eines Sockelgehäuses 24 eine Dreiecksform beschreiben und damit einen langgestreckten, dreieckförmigen lichten Zwischen- bzw. Innenraum 28 begrenzen.

Während das Sockelgehäuse 24 in ansonsten bekannter Weise eine (in den Figuren nicht gezeigte) Vorschaltelektronik zum Betrieb der Leuchtmittelröhren 22 aufweist, ist die Sensorelektronik samt Sende- und Empfangsantenne auf einer flachen Trägerplatine 26 enthalten, die hinsichtlich ihrer Längen- und Breitenabmessungen so ausgebildet ist, dass sie in den langgestreckt-dreiecksförmigen Zwischenraum 28 einsetzbar ist. Eine Kontaktierung mit der im Sockelgehäuse 24 enthaltenen Leuchten- bzw. Steuerelektronik sowie einer hier vorgesehenen Spannungsversorgung erfolgt über bodenseitige Anschlusskontakte 30 an der Schmalseite der Trägerplatine 26.

Anderenends weist diese eine als dielektrischer Resonator 32 ausgebildete Antenne auf, die, vgl. den Ausschnitt gemäß Fig. 6, eine Zylinderform mit einem Durchmesser von ca. 8 mm und einer Höhe h von ca. 4 mm besitzt.

Die Trägerplatine 26 ist in der gezeigten Ausführungsform von einem langgestreckten, metallischen Abschirmelement 34 umgeben, aus welchem lediglich endseitig der Resonator 32 herausragt. Wie in Fig. 2 gezeigt, erstreckt sich auch der Resonatorabschnitt oberhalb der Röhrenpaare 22, wobei hier eine Abdeckkappe 36 gezeigt ist.

Ergänzend zeigt die Fig. 2 seitlich erreichbare Bedienelemente in Form von geeigneten Stellgliedern auf der Trägerplatine 26, die durch einen Abstand zwischen zwei benachbarten Röhrenpaaren 22 betätigbar sind und zur Anpassung einer Schaltschwelle für die Umgebungshelligkeit (der -- eigentlich kompensierte -- Helligkeitssensor ist in den Figuren nicht näher gezeigt), einem Erfassungsbereich des Bewegungssensor sowie einer minimalen Leuchtdauer nach einem Einschalten, wenn keine erneute Bewegung erfasst wird, dienen.

In ansonsten bekannter Weise wird diese Vorrichtung in üblichen Leuchtmittel-Schraubfassungen eingesetzt und -- einschließlich der Bewegungssensor- und Helligkeitssteuerelektronik -- über diese mit Betriebsspannung versorgt.

Als zusätzliche Weiterbildung (in den Figuren nicht gezeigt) ist es möglich, die erfindungsgemäße Vorrichtung mit einer Zeitsteuerung dergestalt zu versehen, dass -- tageszeitabhängig -- verschiedene Betriebsmodi der Leuchtenvorrichtung möglich sind: Zuvor bestimmten Zeiten wird etwa das Leuchtmittel im Dauerbetrieb betrieben, ohne dass eine Bewegungsdetektion notwendig ist; zu sonstigen Zeiten wird die Leuchtmittelaktivierung durch den Bewegungssensor getriggert, der mittels der Trägerplatine und der endseitigen Resonatorantenne 32 im vorliegenden Ausführungsbeispiel realisiert ist.

Weiterbildungsgemäß ist es zudem möglich, die erfindungsgemäße Leuchtenanordnung durch eine Dämmerungs- bzw. Helligkeitssensoreinheit zu ergänzen, die ein Aktivieren bzw. Deaktivieren des Leuchtmittels zusätzlich abhängig von einem aktuellen Umgebungslichtpegel macht, und/oder die zusätzlich eine umgebungslichtabhängige Helligkeitseinstellung des Leuchtmittels vornimmt. Auf diesem Wege läßt sich etwa eine bewegungsgesteuerte Aktivierung des Leuchtmittels dann verhindern, wenn ein sehr heller Umgebungslichtpegel das Einschalten des Leuchtmittels unnötig machen würde.

## Patentansprüche

1. Bewegungssensorgesteuerte Leuchtenvorrichtung mit einem auf einem Befestigungssockel (12; 20) gehaltenen, mit seinen Außenwänden einen lichten Zwischenraum (28) oberhalb des Befestigungssockels begrenzenden Leuchtmittel (14; 22), insbesondere einer Gasentladungslampe, und einem zum Aktivieren oder Deaktivieren des Leuchtmittels als Reaktion auf eine erfasste Bewegung eingerichteten Bewegungssensor (26; 32),
**dadurch gekennzeichnet, dass**
der Bewegungssensor ein auf einem Trägermodul (26) gebildeter Mikrowellensensor mit einer Sende- und/oder Empfangsantenne (16; 32) und einer zugeordneten Sensorelektronik ist, das so auf dem Befestigungssockel (12, 24) vorgesehen ist, dass das Trägermodul (26) mit zumindest einem Teilbereich in dem Zwischenraum (28) aufgenommen ist.

2. Leuchtenvorrichtung nach Anspruch 1, **dadurch gekennzeichnet, dass** das Leuchtmittel ein gekrümmtes Gasentladungsrohr (14;22) aufweist, das sich aufwärts von dem in eine Lampenfassung (10) einsetzbaren Befestigungssockel (12; 24) erstreckt, wobei das Trägermodul (26) mittels eines plattenförmigen, flachen Substrates realisiert ist.

3. Leuchtenvorrichtung nach Anspruch 1 oder 2, **dadurch gekennzeichnet, dass** das Leuchtmittel eine Mehrzahl zueinander parallel verlaufender, langgestreckter Rohrabschnitte aufweist, die den Innen- und/oder Zwischenraum für ein langgestrecktes Trägermodul (26) ausbilden.

4. Leuchtenvorrichtung nach einem der Ansprüche 1 bis 3, **dadurch gekennzeichnet, dass** das Trägermodul so auf dem Befestigungssockel vorgesehen ist, dass zumindest ein Teilbereich des Bewegungserfassungsbereiches der bevorzugt als Resonator (32) realisierten Sende- und/oder Empfangsantenne durch das Leuchtmittel (14; 22) hindurch auf ein zu erfassendes Objekt gerichtet ist.

5. Leuchtenvorrichtung nach einem der Ansprüche 1 bis 4, **dadurch gekennzeichnet, dass** der Befestigungssockel (12; 24) eine Vorschaltelektronik für das Leuchtmittel sowie Kontaktmittel für das Trägermodul aufweist.

6. Leuchtenvorrichtung nach einem der Ansprüche 1 bis 5, **dadurch gekennzeichnet, dass** der Bewegungssensor als Breitband-Impulsradarsensor ausgebildet ist, der das Erfassen von Bewegung oder Anwesenheit auf der Basis von an einem Objekt reflektierten, breitbandigen Radarimpulsen innerhalb eines vorgegebenen Zeittores bewirkt.

7. Leuchtenvorrichtung nach einem der Ansprüche 1 bis 6, **gekennzeichnet durch** eine Vorrichtung zum Erfassen der Umgebungshelligkeit, wobei diese Vorrichtung so auf das Leuchtmittel wirkt, daß eine Aktivierung oder Deaktivierung von einem aktuellen Pegel der Umgebungshelligkeit abhängig ist.

8. Leuchtenvorrichtung nach Anspruch 7, **gekennzeichnet durch** Mittel zur Eigenlichtkompensation des Leuchtmittels, insbesondere eine Einheit zur Schwellwertverschiebung einer Ansprechschwelle der Aktivierung oder Deaktivierung um eine von dem Leuchtmittel selbst erzeugte Lichtmenge.

9. Leuchtenvorrichtung nach einem der Ansprüche 1 bis 8, **gekennzeichnet durch** eine Zeitsteuereinheit, die zum tageszeitabhängigen Umschalten der Leuchtenvorrichtung zwischen einem dauernden Leuchtbetrieb und einem bewegungsgesteuerten Leuchtbetrieb mit bevorzugt vorwählbarer Mindestleuchtdauer ausgebildet ist.

10. Leuchtenvorrichtung nach einem der Ansprüche 1 bis 9, **dadurch gekennzeichnet, dass** der Bewegungssensor als Steckmodul ausgebildet und an dem Befestigungssockel abnehmbar befestigbar ist.

## Claims

1. Lighting device controlled by a motion sensor, comprising a lighting means (14; 22), in particular a gas-discharge lamp, held on a mounting base (12; 20) and delimiting a clear intermediate space (28) above the mounting base by means of its outer walls, and a motion sensor (26; 32) for activating or deactivating the lighting means in response to sensed motion, **characterised in that** the motion sensor is a microwave sensor formed on a carrier module (26) and having a transmitting and/or receiving aerial (16; 32) and an associated electronic sensor unit provided on the mounting base (12; 24) in such a manner that the carrier module (26) is received at least partially in the intermediate space (28).

2. Lighting device according to claim 1, **characterised in that** the lighting means has a curved gas-discharge tube (14; 22) extending upwards from the mounting base (12; 24) which can be inserted into a lamp holder (10), the carrier module (26) being produced by means of a plate-like, flat substrate.

3. Lighting device according to claim 1 or claim 2, **characterised in that** the lighting means has a plurality of elongated tube sections extending in parallel with one another and forming the internal and/or intermediate space for an elongated carrier module (26).

4. Lighting device according to one of claims 1 to 3, **characterised in that** the carrier module is provided on the mounting base in such a manner that at least part of the motion-sensing range of the transmitting and/or receiving aerial preferably designed as a resonator (32) is directed through the lighting means (14; 22) on to an object to be sensed.

5. Lighting device according to one of claims 1 to 4, **characterised in that** the mounting base (12; 24) has an electronic ballast for the lighting means and contact means for the carrier module.

6. Lighting device according to one of claims 1 to 5, **characterised in that** the motion sensor is in the form of a broad-band pulse radar sensor which senses motion or presence on the basis of broad-band radar pulses reflected on an object within a predetermined time gate.

7. Lighting device according to one of claims 1 to 6, **characterised by** a device for sensing ambient luminosity, this device acting on the lighting means in such a manner that activation or deactivation is dependent on a current ambient luminosity level.

8. Lighting device according to claim 7, **characterised by** means for compensating for the self-luminosity of the lighting means, in particular a unit for shifting the threshold value of a response threshold for activation or deactivation by a quantity of light generated by the lighting means itself.

9. Lighting device according to one of claims 1 to 8, **characterised by** a timing unit designed to switch the lighting device between continuous lighting operation and motion-controlled lighting operation with a preferably preselectable minimum lighting duration depending on the time of day.

10. Lighting device according to one of claims 1 to 9, **characterised in that** the motion sensor is in the form of a plug-in module and can be removably fixed to the mounting base.

## Revendications

1. Dispositif d'éclairage commandé par un détecteur de mouvement et équipé d'un moyen d'éclairage (14 ; 22) maintenu sur un socle de fixation (12 ; 20) et délimitant avec ses parois extérieures un espace intermédiaire (28) au-dessus du socle de fixation, en particulier d'une lampe à décharge, et d'un détecteur de mouvement (26 ; 32) aménagé pour l'activation ou la désactivation du moyen d'éclairage en réaction à un mouvement capté, **caractérisé en ce que** le détecteur de mouvement est un détecteur à hyperfréquence formé sur un module support (26) avec une antenne d'émission et/ou de réception (16 ; 32) associée à un circuit électronique de détecteur, qui est prévu sur le socle de fixation (12 ; 24) de telle sorte que le module support (26) est logé avec au moins une zone partielle dans l'espace intermédiaire (28).

2. Dispositif d'éclairage selon la revendication 1, **caractérisé en ce que** le moyen d'éclairage présente un tube à décharge (14 ; 22) coudé, qui s'étend dans le sens avant à partir du socle de fixation (12 ; 24) insérable dans une monture de lampe (10), le module support (26) étant réalisé au moyen d'un substrat plat et en forme de plaque.

3. Dispositif d'éclairage selon la revendication 1 ou 2, **caractérisé en ce que** le moyen d'éclairage présente un grand nombre de parties de tube allongées et parallèles entre elles, qui forment l'espace intérieur et/ou l'espace intermédiaire pour un module support (26) allongé.

4. Dispositif d'éclairage selon l'une quelconque des revendications 1 à 3, **caractérisé en ce que** le module support est prévu sur le socle de fixation de telle façon qu'au moins une zone partielle de la zone de détection de mouvement de l'antenne d'émission et/ou de l'antenne de réception réalisée de préférence comme résonateur (32) est orientée vers un objet à détecter en traversant le moyen d'éclairage (14; 22).

5. Dispositif d'éclairage selon l'une quelconque des revendications 1 à 4, **caractérisé en ce que** le socle de fixation (12 ; 24) présente un module électronique série pour le moyen d'éclairage et des moyens de contact pour le module support.

6. Dispositif d'éclairage selon l'une quelconque des revendications 1 à 5, **caractérisé en ce que** le détecteur de mouvement est conçu comme un détecteur à radar pulsé et à large bande qui entraîne la détection de mouvement ou de présence sur la base d'impulsions de radar réfléchies et à la large bande à l'intérieur d'un intervalle de temps prédéfini.

7. Dispositif d'éclairage selon l'une quelconque des revendications 1 à 6, **caractérisé par** un dispositif pour enregistrer la luminosité ambiante, ce dispositif agissant sur le moyen d'éclairage de telle façon qu'une activation ou une désactivation est dépendante d'un niveau actuel de la luminosité ambiante.

8. Dispositif d'éclairage selon la revendication 7, **caractérisé par** des moyens pour la compensation du moyen d'éclairage en lumière naturelle, en particulier une unité pour le décalage de la valeur seuil pour un seuil de déclenchement de l'activation ou de la désactivation d'une quantité de lumière générée par le moyen d'éclairage même.

9. Dispositif d'éclairage selon l'une quelconque des revendications 1 à 8, **caractérisé par** une unité de commande de temps qui est conçue pour la commutation, dépendante de l'heure du jour, du dispositif d'éclairage entre un éclairage permanent et un éclairage commandé par le mouvement avec une durée d'éclairage minimale qui peut être présélectionnée de préférence.

10. Dispositif d'éclairage selon l'une quelconque des revendications 1 à 9, **caractérisé en ce que** le détecteur de mouvement est conçu comme un module enfichable et peut être fixé de façon amovible sur le socle de fixation.
